# EUROPEAN PATENT APPLICATION

(11) **EP 1 931 146 A2**
(43) Date of publication of application: **11.06.2008**
(21) Application number: 07113077.7
(22) Date of filing: 25.07.2007
(51) Int. Cl.: H04N 7/173

(54) **Client apparatus, server, and method for providing broadcast service**

(30) Priority: 06.12.2006 KR 20060123373
(71) Applicant: Samsung Electronics Co., Ltd., Suwon-si, Gyeonggi-do 442-742 (KR)
(72) Inventor: Kim, Yong-ku, 210-406 Jugong Apt., Gyeonggi-do (KR); Shim, Hyo-sun, 208-1105 Imaechon Hanshin Apt., Gyeonggi-do (KR)
(74) Representative: Robinson, Ian Michael

(57) **Abstract**

An apparatus and method for providing broadcast programs. The method of providing a broadcast program in a client apparatus (200), includes generating final frame information identifying a frame corresponding to a broadcast watching stop time of a broadcast program that a user has been watching; transmitting the final frame information to a server (300) that provides the broadcast program through the Internet; requesting the broadcast program from the server (300); receiving the broadcast program starting from a final frame searched for by the server (300) based on the final frame information; and providing the broadcast program to the user. It is possible to provide a broadcast program from the stopped part of the broadcast program at a desired time after a user stops watching the broadcast program, even though the broadcast program is not recorded by the client apparatus (200).

## Description

### CROSS-REFERENCE TO RELATED APPLICATIONS

This application claims the benefit of Korean Patent Application No. 2006-123373, filed in the Korean Intellectual Property Office on December 6, 2006, the disclosure of which is incorporated herein by reference.

### BACKGROUND OF THE INVENTION

### 1. Field of the Invention

Aspects of the present invention relate to an apparatus and method of providing broadcast programs and, more particularly, to a client apparatus, a server, and a method of providing a broadcast program from a stopped part of the broadcast program at a user's desired time, after he or she stops watching the broadcast program.

### 2. Description of the Related Art

When a user must stop watching a broadcast program, such as when he or she must do something else or must turn off the user terminal receiving the broadcast program, he or she must record the broadcast program in order to watch the remaining broadcast part at his or her desired time. In order to record the broadcast program, the user terminal receiving the broadcast program must include a high capacity memory or must connect to an external storage unit. The user terminal must also be turned on while the broadcast program is recorded.

### SUMMARY OF THE INVENTION

According to the present invention there is provided an apparatus and method as set forth in the appended claims. Other features of the invention will be apparent from the dependent claims, and the description which follows.

Aspects of the present invention provide a client apparatus, a server, and a method of providing a broadcast program from a stopped part of the broadcast program at a user's desired time, after he or she stops watching the broadcast program.

According to an aspect of the present invention, a method of providing a broadcast program in a client apparatus is provided, the method including: generating final frame information identifying a frame corresponding to a broadcast watching stop time of a broadcast program that a user has been watching; transmitting the final frame information to a server that provides the broadcast program through the Internet; requesting the broadcast program from the server; receiving the broadcast program starting from a final frame found by the server based on the final frame information; and providing the broadcast program to the user.

According to another aspect of the present invention, a method of providing a broadcast program in a server is provided, the method including: receiving and storing final frame information identifying a frame corresponding to a user's broadcast watching stop time, from one or more client apparatuses; receiving a broadcast program request signal from one of the one or more client apparatuses; searching for a final frame of a broadcast program corresponding to final frame information transmitted from the client apparatus; and transmitting the broadcast program to the client apparatus starting from the final frame.

According to another aspect of the present invention, a client apparatus to provide a broadcast program is provided, the client apparatus including: a controller to generate final frame information identifying a final frame corresponding to a broadcast watching stop time of a broadcast program that a user has been watching; and a communication unit to transmit the final frame information to a server that provides the broadcast program through the Internet, to request the broadcast program from the server, and to receive the broadcast program starting from a frame searched for by the server based on the final frame information.

According to another aspect of the present invention, provided a server to provide a broadcast program to a client apparatus is provided, the server including: a communication controller to receive final frame information identifying a frame corresponding to a broadcast watching stop time from one or more client apparatuses and to receive a broadcast program request signal from one of the one or more client apparatuses; a storage unit to store the final frame information; and a search unit to search for a final frame of a broadcast program corresponding to the final frame information stored in the storage unit and transmitted from the client apparatus; wherein the communication unit transmits the broadcast program starting from the final frame to the client apparatus according to the broadcast program request signal received from the client apparatus.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 shows an environment in which a client apparatus according to an embodiment of the present invention receives a broadcast program from a broadcaster and a broadcast program transmission server;
FIG. 2 is a block diagram of a client apparatus providing a broadcast program, according to an embodiment of the present invention;
FIG. 3 is a block diagram of a server providing a broadcast program, according to an embodiment of the present invention;
FIG. 4 shows the configuration of Final Frame Identification (FFID) according to an embodiment of the present invention;
FIG. 5 is a flowchart of a technique of providing a broadcast program performed by the client apparatus, according to an embodiment of the present invention; and
FIG. 6 is a flowchart of a technique of providing a broadcast program performed by the server, according to an embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

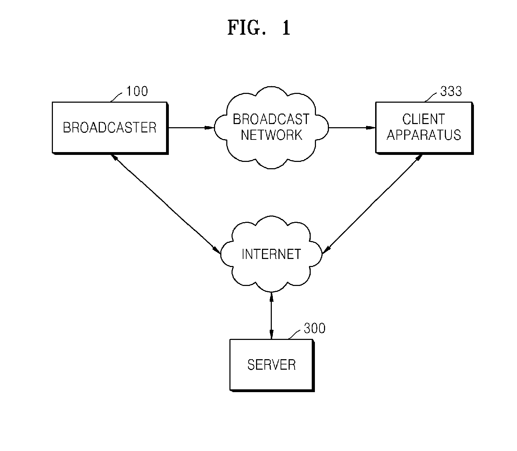

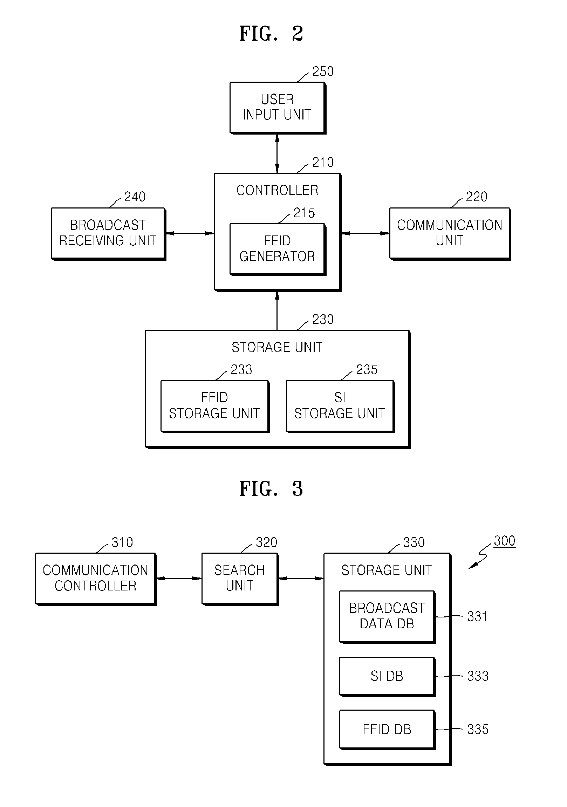

FIG. 1 shows an environment in which a client apparatus 200 according to an embodiment of the present invention receives a broadcast program from a broadcaster 100 and a broadcast program transmission server 300. The broadcaster 100 sends broadcast signals to the client apparatus 200, using broadcast media such as satellites, ground waves, cables, or the Internet. The broadcast signals include broadcast programs (such as AV streams) and information about the broadcast programs. The information about the broadcast programs includes EPG (electronic program guide) information and description information for the broadcast programs. The server 300 includes a broadcast data database (DB) 331 (shown in FIG. 3) to store the broadcast programs and the information about the broadcast programs. If the client apparatus 200 requests a broadcast program, the broadcast program is packetized to Internet Protocol (IP) packets and then transmitted to the client apparatus 200 through the Internet.

The client apparatus 200, which is a user terminal to provide broadcast programs, provides broadcast programs received through communication with the server 300, or can provide broadcast programs received from the broadcaster 100, through broadcast channels such as satellites, ground waves, cables, or the Internet. The client apparatus 200 may be a personal computer (desktop or portable), a set-top box, a digital television, a mobile phone, a personal entertainment device, or a personal digital assistant (PDA).

When the user stops watching the broadcast program received from the broadcaster 100 or the server 300, the client apparatus 200 generates final frame information identifying a frame corresponding to a broadcast watching stop time and transmits the final frame information to the server 300. In this specification, "frame" indicates frame unit information for broadcast program data consisting of various media including audio and video. "Broadcast watching stop time" indicates the time at which a user issues a user input requesting a broadcast program to be stopped. The broadcast watching stop time can be information indicating how much time has elapsed from when the broadcast program started.

The server 300 includes a final frame information database (FFID DB) 335 (shown in FIG. 3) to store the final frame information received from the client apparatus 200 and other client apparatuses. The server 300 manages the FFID DB 335. When the user wants to resume watching the broadcast program that he or she stopped watching, the client apparatus 200 requests the stopped broadcast program from the server 300. The server 300 searches the broadcast data DB 331 for the final frame that the user watched, with reference to the final frame information transmitted by the client apparatus 200. The server 300 then transmits the broadcast program that the user has stopped watching to the client apparatus 200, starting from the final frame. Using the client apparatus 200, the user can resume watching the broadcast program from the frame at which the broadcast program was stopped, without needing to record the broadcast program.

FIG. 2 is a block diagram of the client apparatus 200, according to an embodiment of the present invention. The client apparatus 200 includes a controller 210, a communication unit 220, a storage unit 230, a broadcast receiver 240, and a user input unit 250. The client apparatus according to other aspects of the invention may include different components or may omit one of more of the above components. Similarly, one or more of the above components may be integrated into a single unit.

The controller 210 controls data transmission/reception between the components of the client apparatus 200, thereby controlling the entire client apparatus 200. The controller 210 generates final frame information identifying the frame at the time when the user stops watching a broadcast program. The final frame information is called "Final Frame Identification (FFID)". The controller 210 includes a FFID generator 215 to generate the final frame information. The final frame may be that provided at the time when a user input to stop the broadcast program is received, or at the time when a user input to turn off a broadcast program providing apparatus is received while the user is watching the broadcast program.

The communication unit 220 receives and processes the IP-packetized broadcast program transmitted from the server 300 through the Internet. The communication unit 220 transmits the final frame information generated by the controller 210 to the server 300 (shown in FIG. 1) that provides the broadcast program through the Internet and requests the broadcast program from the server 300. The communication unit 220 receives a final frame searched for by the server 210 based on the final frame information.

The client apparatus 200 includes a broadcast receiver 240 in order to receive and process a multiplexed broadcast signal based on a transmission path, such as ground waves, satellites, cables, or the Internet. The broadcast receiver 240 processes the broadcast signal and separates information about broadcast programs from broadcast data. The broadcast receiver 240 may include an antenna, satellite dish, cable, or other device to receive a broadcast signal.

The user input unit 250 receives a user input signal and transmits the user input signal to the controller 210 so that the controller 210 controls the operation of the client apparatus 200 on the basis of the user input signal. The user input 250 may be a remote control, a keyboard, a mouse, a touchpad, a microphone, one or more buttons on the client apparatus 200, or other device capable of receiving input from a user. The storage unit 230 includes an FFID storage unit 233 to store the final frame information generated by the controller 210 and a Service Information (SI) storage unit 235 to store the information about the broadcast program required to generate the final frame information.

The controller 210 generates the final frame information using information about broadcast programs received through the Internet or acquired from broadcast signals received through different broadcast media and information identifying a final frame corresponding to the time at which the user stops watching the broadcast program.

The information about the broadcast programs may be obtained in different ways depending on the format in which the broadcast program is broadcasted. For programs broadcast in the Digital Video Broadcasting (DVB) format, the information about broadcast programs that can be obtained through the broadcast receiver 240 can be obtained from service information (SI). An Event Information Table (EIT) that is part of the SI information provides information including names, start times, broadcast times, etc., of the respective programs. Content for a service provider, a service name, etc., are provided from a Service Description Table (SDT). In order to generate the final frame information, a broadcast program identifier event_id, a broadcast station identifier service_id, and time information (a start time and an end time) of the corresponding broadcast program can be obtained from the EIT. In the case of the Advanced Television System Committee (ATSC) format, the broadcast program identifier, the broadcast station identifier service_id, and the time information (a start time and an end time) of the corresponding broadcast program can be obtained from the Program and System Information Protocol (PSIP). In the case of the Internet broadcasting format, the information about broadcast programs can be obtained from packets that transmit the broadcast programs.

The information identifying the final frame may be a final frame identifier that allows the final frame to be found directly. For example, the final frame identifier may be information indicating the order of the final frame in the corresponding broadcast program. The information identifying the final frame may be information about a broadcast time that can be used to find the final frame.

If information identifying frames of a broadcast program is included in a received broadcast signal, the controller 210 can determine identification information for a frame corresponding to a broadcast watching stop time and use the identification information to generate the final frame information. The controller 210 may generate identification information about a broadcast station that provides the broadcast program the user has been watching and broadcast program identification information. The broadcast program identification information is information identifying the broadcast program that the user has been watching and final frame information identifying the final frame.

The controller 210 may generate the final frame information using the broadcast station identification information, the broadcast program identification information, and the user's broadcast watching stop time. The start and end times of the broadcast program may be further included in the final frame information. Since the server 300 stores the information about broadcast programs, if the server 300 can identify broadcast programs, the server 300 can directly search for the start and end times of the broadcast program even when the start and end times of the broadcast program are not included in the final frame information.

The broadcast watching stop time may be time information indicating how much time has elapsed since the broadcast program started. The server 300 may determine the final frame using the start and end times of the broadcast program, the total number of frames of the broadcast program, the number of frames displayed per second, and the broadcast watching stop time. If a user input signal requesting the broadcast program is received after the user has requested to stop the broadcast program, and the communication unit 220 requests the broadcast program from the server 300, the communication unit 220 can re-transmit the final frame information to the server 300.

FIG. 3 is a block diagram of the server 300, according to an embodiment of the present invention. The server 300 includes a communication controller 310, a search unit 320, and a storage unit 330. As with the client apparatus 200, the server 300 according to other aspects of the invention may include different components, omit one or more components, or combine one or more components into a single unit.

The communication controller 310 receives the final frame information identifying a frame corresponding to a user's broadcast watching stop time from the client apparatus 200 or other client apparatuses, and stores the final frame information in the storage unit 330. The communication controller 310 also receives broadcast program requests from the client apparatus 200.

The storage unit 330 includes the broadcast data database (DB) 331 to store broadcast data, a service information database 333 to store information about broadcast programs and the final frame information database (FFID DB) 335 to store final frame information received from a plurality of client apparatuses including the client apparatus 200. The storage unit 330 stores and manages the broadcast program data, the information about broadcast programs, and the final frame information. The storage unit 330 stores the final frame information in the FFID DB 335 according to the IP address of the client apparatus 200. The storage unit 330 may also store the final frame information in the FFID DB 335, according to an identifier FFID_ID of the final frame information.

If a broadcast program request signal is received from the client apparatuses, the search unit 320 searches for final frame information stored in the FFID DB 335 based on information included in the broadcast program request signal, and searches for a final frame of the corresponding broadcast program from the broadcast program data DB 331 based on the search final frame information. If final frame information is stored for the IP address of each client apparatus that requests the broadcast program from the server 300, the search unit 320 may check an IP address included in the broadcast program request signal and search the FFID DB 335 for final frame information for the corresponding client apparatus.

After obtaining the final frame information, the search unit 320 searches for a final frame using the final frame information. The search unit 320 can determine the final frame from broadcast data stored in the broadcast data DB 331. The broadcast data DB 331 can be searched using a frame identifier of the broadcast program, based on final frame information including a broadcast station identifier, a broadcast program identifier, and a final frame identifier.

In a technique of re-receiving final frame information from the client apparatus 200, if the communication controller 310 receives a broadcast program request signal, the search unit 320 searches for final frame information corresponding to a received final frame identifier using final frame information stored for each final frame identifier. The search unit 320 searches for a final frame in the broadcast data DB 331 based on the final frame information. If final frame information including a broadcast station identifier, a broadcast program identifier, a broadcast program start time, a broadcast program end time, and a broadcast watching stop time is stored in FFID DB 335, the search unit 320 can determine a final frame from the broadcast data DB 335, since information about the total number of frames of the corresponding broadcast program and the number of frames displayed per second can be acquired from the SI DB 333 of the storage unit 330.

The communication controller 310 transmits the broadcast program to the client apparatus 200 starting from the final frame found according to the broadcast program request signal output from the client apparatus 200.

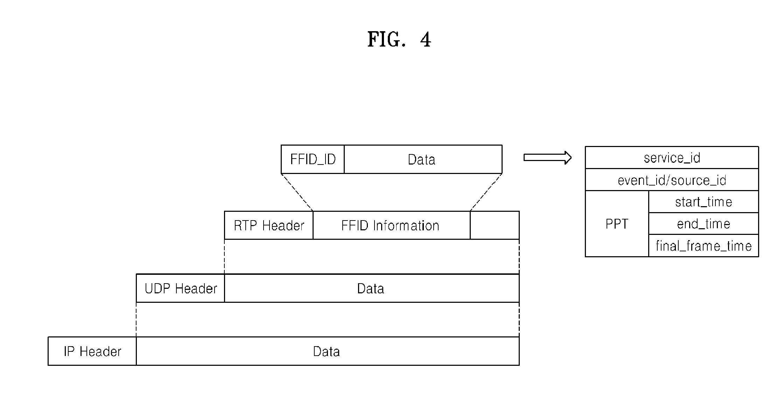

FIG. 4 shows the configuration of final frame information (FFID) according to an embodiment of the present invention. The client apparatus 200 may generate final frame information as illustrated in FIG. 4. A packet for transmitting the final frame information includes a header region in which an identifier FFID_ID identifying the final frame information FFID is included, and a data region in which the final frame information is included.

The final frame information, as illustrated in FIG. 4, includes a broadcast station identifier service_id, a broadcast program identifier event_id or source_id, and a Program Pointer Timetable (PPT). The PPT includes a start time, an end time, and a final frame time of the broadcast program. The final frame information includes information identifying the broadcast program that a user has been watching and information identifying a final frame of the broadcast program. The final frame information may be generated in various formats. The final frame information is compression-encoded, packetized according to an RTP method, and then packetized according to a UDP method. The RTP/UDP packet is packetized according to an IP method, becomes RTP/UDP/IP packet data, and transmitted to the server 300.

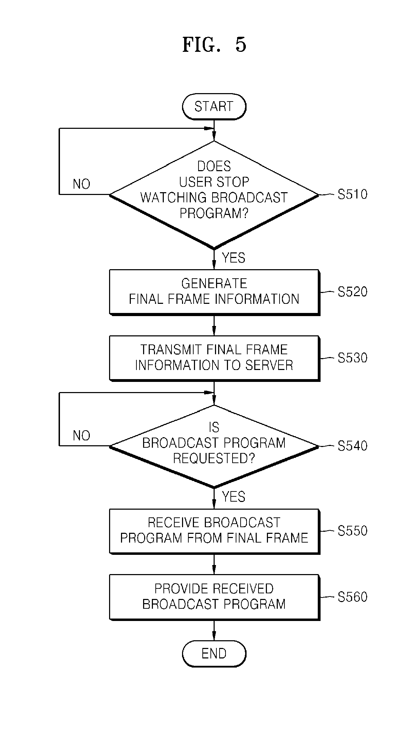

FIG. 5 is a flowchart of a technique of providing a broadcast program performed by the client apparatus 200, according to an embodiment of the present invention. Referring to FIGS. 1 and 5, in operation S510, the client apparatus 200 determines whether a broadcast watching stop request signal is received from a user watching a broadcast program through the client apparatus 200.

In operation S520, final frame information is generated identifying a frame corresponding to a broadcast watching stop time of the broadcast program that the user is watching. The final frame information may include broadcast station identification information, broadcast program identification information, and a final frame identifier. The final frame information may also include broadcast station identification information, broadcast program identification information, time information including the start and end times of the broadcast program, and information about the broadcast watching stop time. In order to transmit the final frame information, a packet is generated having an identifier identifying the final frame information.

In operation S530, the client apparatus 200 transmits the final frame information to the server 300 through the Internet. The client apparatus 200 may then perform a different operation requested by the user, such as showing another program or turning off the client apparatus 200.

In operation S540, the client apparatus 200 determines whether the user requests to resume watching the broadcast program. If so, the client apparatus 200 requests the stopped broadcast program from the server 300. The client apparatus 200 re-transmits the final frame information to the server 300, thereby requesting the broadcast program from the server 300. In operation S550, the client apparatus 200 receives the broadcast program starting from the final frame found by the server 300 based on the final frame information. In operation S560, the received broadcast program is output and provided to the user.

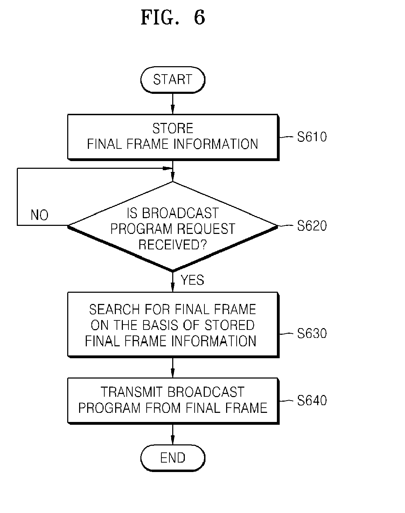

FIG. 6 is a flowchart of a technique of providing the broadcast program performed by the server 300, according to an embodiment of the present invention. In operation S610, final frame information identifying a frame corresponding to a user's broadcast watching stop time is received from the client apparatus 200 and stored. The final frame information may be stored for the IP address of each client apparatus. The final frame information may also be stored for each identifier FFID_ID of final frame information.

In operation S620, the server 300 determines whether a broadcast program request signal is received from the client apparatus 200. If a broadcast program request signal is received from the client apparatus 200, then in operation S630, the server 300 searches for a final frame of the broadcast program corresponding to the final frame information. If the broadcast program request signal is a request signal including an IP address of the corresponding client apparatus 200, then the server 300 searches for final frame information corresponding to the IP address of the client apparatus 200. The server 300 searches for a final frame based on the final frame information. If the broadcast program request signal includes final frame information, the server 300 searches for the final frame information using the final frame identifier FFID_ID and then searches for the corresponding final frame. In operation S640, the broadcast program is transmitted to the client apparatus 200 starting from the final frame.

Broadcast program provision techniques according to aspects of the present invention may be recorded in computer-readable media including program instructions to implement various operations embodied by a computer. The media may also include, alone or in combination with the program instructions, data files, data structures, and the like. Examples of computer-readable media include magnetic media such as hard disks, floppy disks, and magnetic tape; optical media such as CDs and DVDs; magneto-optical media such as optical disks; and hardware devices that are specially configured to store and perform program instructions, such as read-only memory (ROM), random access memory (RAM), flash memory, and the like; and a computer data signal embodied in a carrier wave comprising a compression source code segment and an encryption source code segment (such as data transmission through the Internet). Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention.

As described above, according to aspects of the present invention, it is possible to provide a broadcast program from the stopped part of the broadcast program at a desired time after a user stops watching the broadcast program, without recording the broadcast program. Accordingly, it is possible to successively provide a broadcast program from a final frame at which the broadcast program is stopped, even when an apparatus providing the broadcast program does not include a high capacity storage unit. Also, according to aspects of the present invention, since a client apparatus for providing broadcast programs does not need to be turned on in order to record a broadcast program stopped by a user, it is possible to reduce the power consumption and extend the useable time of devices such as mobile terminals.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of providing a broadcast program in a client apparatus (200), comprising:
generating final frame information identifying a frame corresponding to a broadcast watching stop time of a broadcast program that a user has been watching;
transmitting the final frame information to a server (300) that provides the broadcast program, through the Internet;
requesting the broadcast program from the server (300);
receiving the broadcast program starting from a final frame found by the server (300) based on the final frame information; and
providing the broadcast program to the user.

2. The method of claim 1, wherein the final frame information comprises broadcast station identification information, broadcast program identification information, and a final frame identifier.

3. The method of claim 1, wherein the final frame information comprises broadcast station identification information, broadcast program identification information, and stop time information about the broadcast watching stop time.

4. The method of claim 1, wherein the generating of the final frame information comprises generating a packet through which final frame information is transmitted by adding a final frame information identifier identifying the final frame information.

5. The method of claim 1, wherein the requesting of the broadcast program to the server (300) comprises:
receiving a user input signal requesting the broadcast program after the user stops watching the broadcast program; and
re-transmitting the final frame information through the Internet to the server (300) according to the user input signal.

6. A method of providing a broadcast program in a server (300), comprising:
receiving and storing final frame information identifying a frame corresponding to a user's broadcast watching stop time, from one or more client apparatuses (200);
receiving a broadcast program request signal from one of the one or more client apparatuses (200);
searching for a final frame of a broadcast program corresponding to the final frame information transmitted from the client apparatus (200); and
transmitting the broadcast program to the client apparatus (200) starting from the final frame.

7. The method of claim 6, wherein the storing of the final frame information comprises storing the final frame information for each IP address of the one or more client apparatuses (200).

8. The method of claim 6, wherein the storing of the final frame information comprises storing, when the final frame information is received, the final frame information for each identifier of the final frame information.

9. The method of claim 6, wherein the searching of the final frame of the broadcast program corresponding to the final frame information comprises searching for the final frame using a final frame identifier included in the final frame information.

10. The method of claim 6, wherein the searching of the final frame of the broadcast program corresponding to the final frame information comprises searching for
the final frame based on time information including a start time and an end time of a broadcast program included in the final frame information and stop time information about a broadcast watching stop time.

11. The method of claim 6, wherein the receiving of the broadcast program request signal from the client apparatus (200) comprises re-receiving the final frame information from the client apparatus (200).

12. A client apparatus (200) to provide a broadcast program comprising:
a controller (210) to generate final frame information identifying a final frame corresponding to a broadcast watching stop time of a broadcast program that a user has been watching; and
a communication unit (220) to transmit the final frame information to a server (300) that provides the broadcast program through the Internet, to request the broadcast program from the server (300), and to receive the broadcast program starting from a frame searched for by the server (300) based on the final frame information.

13. The client apparatus (200) of claim 12, wherein the final frame information comprises broadcast station identification information, broadcast program identification information, and a final frame identifier.

14. The client apparatus (200) of claim 12, wherein the final frame information comprises broadcast station identification information, broadcast program identification information, and stop time information about the broadcast watching stop time.

15. The client apparatus (200) of claim 12, wherein the controller (210) generates a packet having an identifier identifying the final frame information.

16. The client apparatus (200) of claim 12, further comprising:
a user input unit (250) to receive a user input signal;
wherein if the user input signal requesting the broadcast program after the user has stopped watching the broadcast program is received through the user input unit (250), the controller (210) controls the communication unit (220) to re-transmit the final frame information to the server (300).

17. A server (300) to provide a broadcast program to a client apparatus (200), the server (300) comprising:
a communication controller (310) to receive final frame information identifying a frame corresponding to a broadcast watching stop time from one or more client apparatuses (200) and to receive a broadcast program request signal from one of the one or more client apparatuses (200);
a storage unit (330) to store the final frame information; and
a search unit (320) to search for a final frame of a broadcast program corresponding to the final frame information stored in the storage unit (330) and transmitted from the client apparatus (200);
wherein the communication unit (220) transmits the broadcast program starting from the final frame to the client apparatus (200) according to the broadcast program request signal received from the client apparatus (200).

18. The server (300) of claim 17, wherein the final frame information is stored in the storage unit (330) for each IP address of the one or more client apparatuses (200).

19. The server (300) of claim 17, wherein the final frame information is stored in the storage unit (330) for each identifier of final frame information, when the final frame information is received.

20. The server (300) of claim 17, wherein the search unit (320) searches for the final frame using a final frame identifier included in the final frame information.

21. The server (300) of claim 17, wherein the search unit (320) searches for the final frame based on time information including a start time and an end time of a broadcast program included in the final frame information and stop time information about the broadcast watching stop time.

22. The server (300) of claim 17, wherein if the final frame information is included in the broadcast program request signal, the search unit (320) searches for the final frame information on the basis of an identifier in the final frame information.

23. A computer-readable recording medium having embodied thereon a program to execute a method of providing a broadcast program in a client apparatus (200), the method comprising:
generating final frame information identifying a frame corresponding to a broadcast watching stop time of a broadcast program that a user has been watching;
transmitting the final frame information to a server (300) providing the broadcast program through the Internet;
requesting the broadcast program from the server (300);
receiving the broadcast program starting from a final frame searched for by the server (300) based on the final frame information; and
providing the broadcast program to the user.

24. A computer-readable recording medium having embodied thereon a program to execute a method for providing a broadcast program in a server (300), the method comprising:
receiving and storing final frame information identifying a frame corresponding to a user's broadcast watching stop time from one or more client apparatuses (200);
receiving a broadcast program request signal from one of the one or more client apparatuses (200);
searching for a final frame of a broadcast program corresponding to the final frame information transmitted from the client apparatus (200); and
transmitting the broadcast program to the client apparatus (200) starting from the final frame.

25. A method of providing a broadcast program after a user has stopped watching the broadcast program without recording the broadcast program, the method comprising:
transmitting final frame information to a server (300) relating to the final frame of the broadcast program that the user viewed;
requesting the server (300) for the broadcast program starting from the final frame; and
receiving the broadcast program from the server (300) starting from the final frame.

26. A method of providing a broadcast program after a user has stopped watching the broadcast program without recording the broadcast program, the method comprising:
receiving final frame information from a client apparatus (200) relating to the final frame of the broadcast program that the user viewed;
storing the final frame information;
receiving a request for the broadcast program; and
transmitting the broadcast program to the client apparatus (200) starting from the final frame indicated by the stored final frame information.

27. The method of claim 26, further comprising:
retrieving the stored final frame information upon receiving the request for the broadcast program; and
determining the final frame based on the retrieved final frame information.

28. The method of claim 27, wherein:
the final frame information includes an IP address of the client apparatus (200);
the storing of the final frame information comprises storing the final frame information based on the IP address of the client apparatus (200);
the request for the broadcast program includes the IP address of the client apparatus (200); and
the retrieving of the stored final frame information comprises retrieving the stored final frame information based on the IP address of the client apparatus (200).

29. The method of claim 27, wherein:
the final frame information includes a final frame identifier;
the storing of the final frame information comprises storing the final frame information based on the final frame identifier;
the request for the broadcast program includes the final frame identifier; and
the retrieving of the stored final frame information comprises retrieving the stored final frame information based on the final frame identifier.
